# EUROPÄISCHE PATENTSCHRIFT

(11) **EP 0 704 022 B1**
(45) Veröffentlichungstag und Bekanntmachung des Hinweises auf die Patenterteilung: **02.12.1998**
(21) Anmeldenummer: 95913861.1
(22) Anmeldetag: 24.03.1995
(51) Int. Cl.: F02M 61/04

(54) **KRAFTSTOFFEINSPRITZDÜSE FÜR BRENNKRAFTMASCHINEN**
FUEL INJECTION NOZZLE FOR INTERNAL COMBUSTION ENGINES
INJECTEUR DE CARBURANT POUR MOTEUR A COMBUSTION INTERNE

(30) Priorität: 15.04.1994 DE 4413217
(43) Veröffentlichungstag der Anmeldung: 03.04.1996
(73) Patentinhaber: ROBERT BOSCH GMBH, 70442 Stuttgart (DE)
(72) Erfinder: POTZ, Detlev, D-70193 Stuttgart (DE); LEWENTZ, Günter, D-71282 Hemmingen (DE); GORDON, Uwe, D-71706 Markgröningen (DE); HAUG, Stefan, D-70771 Leinfelden-Echterdingen (DE)
(86) Internationale Anmeldenummer: DE9500407
(87) Internationale Veröffentlichungsnummer: WO9528561

(56) Entgegenhaltungen:
- DD-A- 1 803
- DE-A- 3 031 625
- DE-C- 304 032
- DE-C- 363 572
- FR-A- 564 906
- US-A- 1 589 238
- US-A- 2 646 063

## Beschreibung

### Stand der Technik

Die Erfindung geht aus von einer Kraftstoffeinspritzdüse für Brennkraftmaschinen nach dem Oberbegriff des Anspruchs 1. Bei einer beispielsweise aus der US-A-1 589 239 bekannten Kraftstoffeinspritzdüse dieser Art ist die federnde Ventilmembran als ebene Scheibe mit einer die Durchlaßöffnung begrenzenden Verstärkung in Form einer Nabe ausgebildet. Der Außenrandbereich der Membran ist mit einer Überwurfmutter fest gegen den Haltekörper gespannt, so daß die Membran mit einer Ringkante der Durchlaßöffnung mit einer bestimmten Vorspannung, die den öffnungsdruck festlegt, am Ventilkegel der Düsennadel anliegt, der axial in den Druckraum des Haltekörpers ragt. Beim Zuführen von Kraftstoff und Aufbau eines Druckes im Druckraum wölbt sich die Membran von der Düsennadel weg zum Brennraum hin, wobei die Randkante der Durchlaßöffnung vom Ventilkegel der Düsennadel abhebt und einen ringförmigen Ventilspalt freigibt. Die die Durchlaßöffnung bestimmende Nabe ist an der Lochmembran als Verstärkung angeordnet, damit sich die Durchbiegung bzw. Wölbung nicht nur auf den der Durchlaßöffnung nahen Bereich konzentriert, sondern sich über die gesamte Fläche verteilt. Aber auch diese Ausgestaltung der Membran läßt hinsichtlich der Dauerfestigkeit zu wünschen übrig, da beim jeweiligen Wölben der Membran sehr hohe Spannungen in dem sich an den eingespannten Außenbereich anschließenden Ringbereich auftreten.

Ferner ist aus der DD-A-1 803 eine Kraftstoffeinspritzdüse mit einer federnden, randseitig eingespannten Ventilmembran bekannt geworden, deren die Durchlaßöffnung umgebender Innenrandbereich ventilartig mit einer Düsennadel zusammenwirkt. Um ein Einreißen der Ventilmembran an der Durchlaßöffnung auch nach längerer Betriebszeit zu vermeiden, ist der den Sitzbereich bildende Innenrandbereich durch eine der Spritzrichtung entgegengesetzte Auspressung gebildet und der daran nach außen anschließende Ringbereich von einer federnden Ringscheibe unterstützt. Auch bei dieser Form der Ventilmembran treten nahe dem eingespannten Außenrandbereich hohe Spannungen auf, die die Dauerfestigkeit der Ventilmembran beeinträchtigen.

### Vorteile der Erfindung

Die erfindungsgemäße Kraftstoffeinspritzdüse mit den kennzeichnenden Merkmalen des Anspruchs 1 hat den Vorteil, daß aufgrund der gegen die Druckbeaufschlagungsrichtung gerichteten Wölbung der Ventilmembran in dieser beim Öffnen des Ventils durch Durchbiegen entgegen der Wölbung über den gesamten Bereich keine kritschen Spannungen auftreten. Durch Begrenzung der Federung auf ein bestimmtes Maß bleiben die Spannungen innerhalb eines bestimmten Grenzbereichs, so daß die Membrane eine sehr hohe Dauerschwellfestigkeit für eine lange Nutzungsdauer hat.

Durch die Gestaltung der Wölbung verhindert der steil gegen den Druckraum ansteigende Ringbereich, der sich an den eingespannten Außenrandbereich anschließt, und der flach ansteigende Innenbereich die Entstehung von unzulässig hohen Spitzenspannungen, so daß die Ermüdungslebensdauer der Ventilmembran wesentlich gesteigert wird. Dies wird dadurch erreicht, daß an den kritischen Stellen geometriebedingt unkritische Druckspannungen den kritischen Zugspannungen überlagert werden.

Durch die in den Unteransprüchen aufgeführten Maßnahmen sind vorteilhafte Weiterbildungen und Verbesserungen der in den Ansprüchen 1 und 2 angegebenen Kraftstoffeinspritzdüse möglich.

### Zeichnung

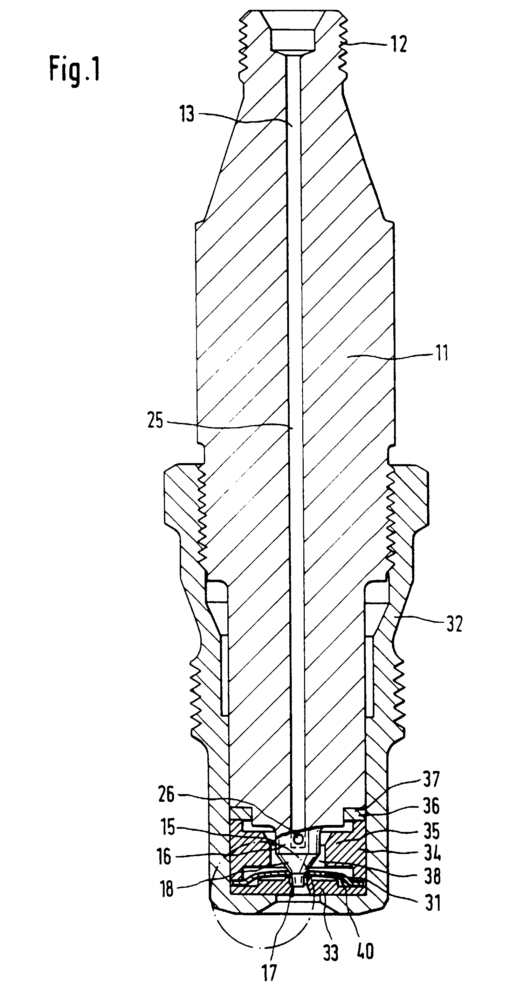

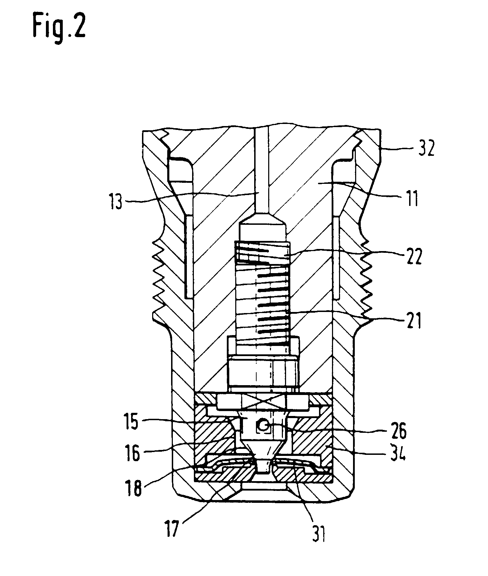

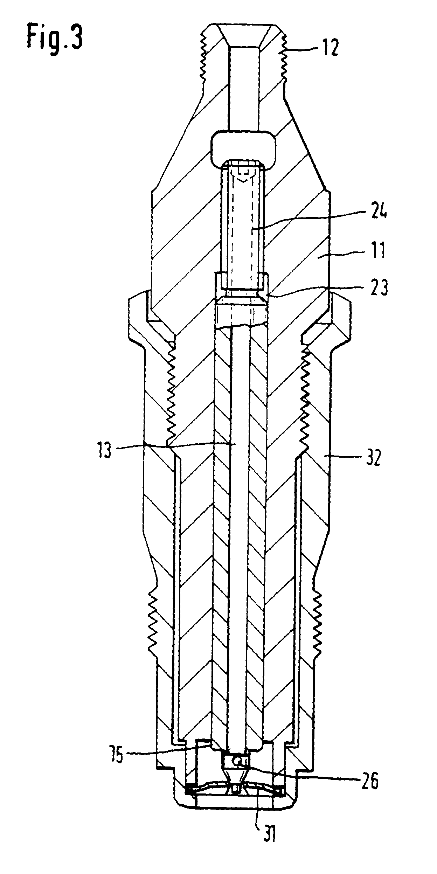

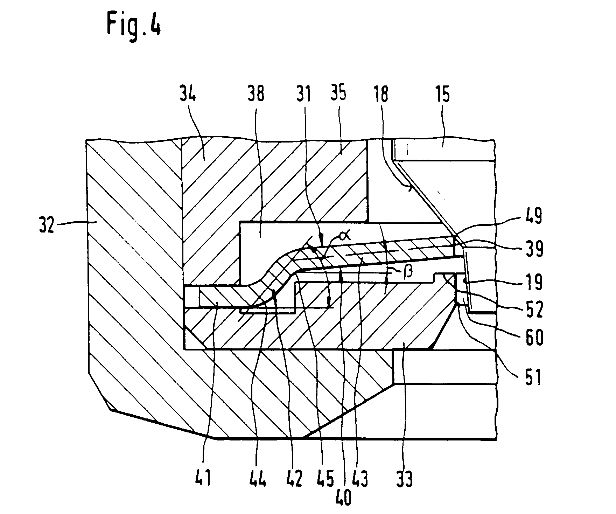

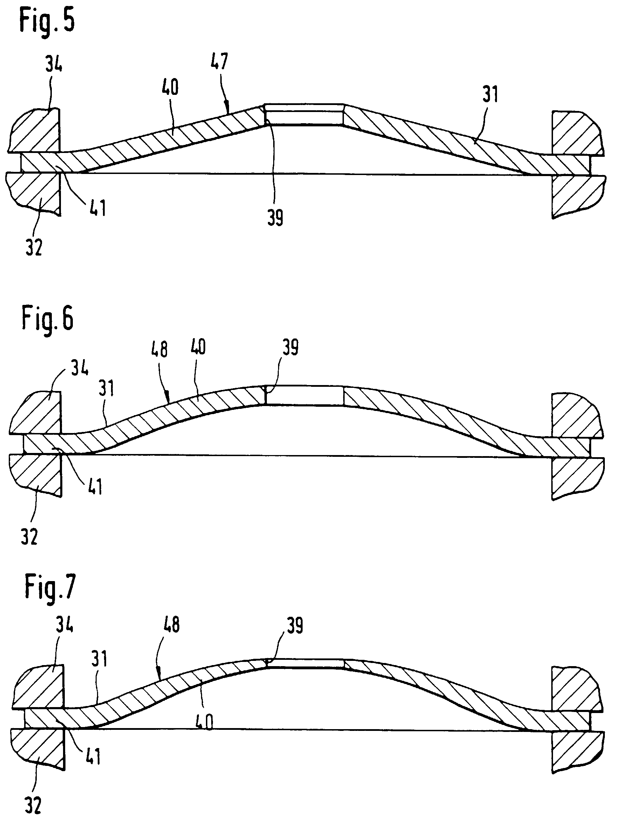

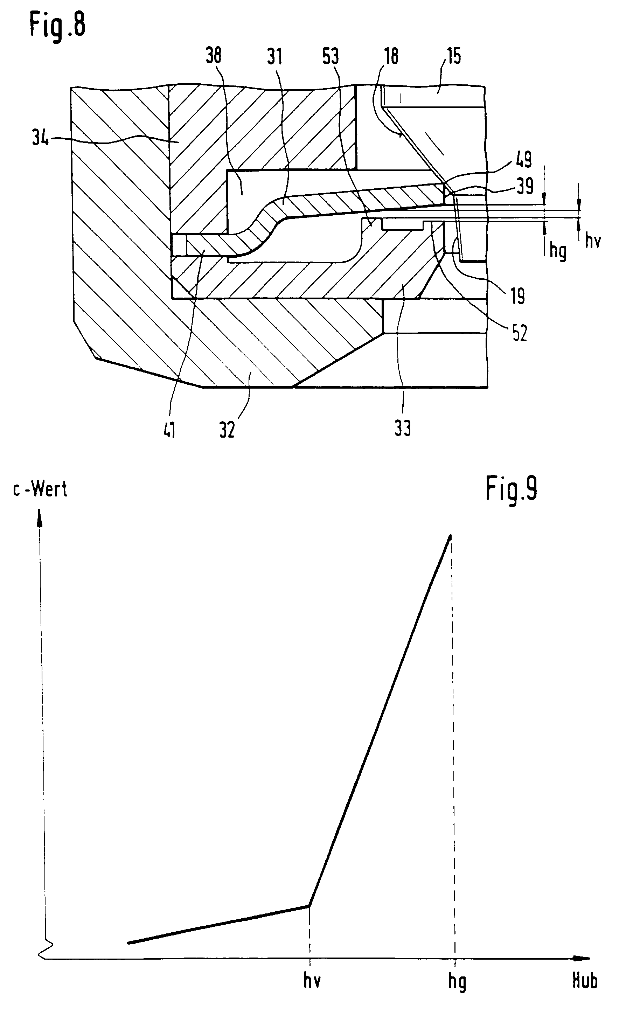

Ausführungsbeispiele der Erfindung sind in der Zeichnung dargestellt und werden im folgenden näher beschrieben. Es zeigen Figur 1 eine Kraftstoffeinspritzdüse im Längsschnitt, Figur 2 und 3 zwei alternative Ausführungsbeispiele einer Kraftstoffeinspritzdüse mit einstellbarer Düsennadel im Längsschnitt, Figur 4 den Ventilbereich der Kraftstoffeinspritzdüse nach den Figuren 1 bis 3 in vergrößertem Maßstab im Schnitt, Figur 5 bis 7 drei alternativ geformte Ventilmembranen im Querschnitt, die nicht gemäß Anspruch 1 ausgeführt sind, die Figuren 8 bis 13 alternative Ausgestaltungen des Ventilbereichs und die dazugehörigen Diagramme der Öffnungscharakteristik von Kraftstoffeinspritzdüsen nach den Figuren 1 bis 3, Figur 14 und 15 eine alternative Ausgestaltung der Düsennadel im Ventilbereich und das dazugehörige Spritzquerschnitt-Diagramm.

### Beschreibung der Ausführungsbeispiele

Ein rotationssymmetrischer Haltekörper 11 hat an seinem Zulaufende einen Anschluß 12 für eine Kraftstoffzuleitung, einen durchgehenden axialen Zulaufkanal 13 und an seinem brennraumseitigen Ende eine axial vorstehende Düsennadel 15. Die Düsennadel 15 selber hat einen zylindrischen Abschnitt 16 und einen sich daran anschließenden Endabschnitt 17 mit einem Ventilkegel 18 und einem Strahlformungszapfen 19.

Beim Ausführungsbeispiel nach Figur 1 ist die Düsennadel 15 einstückig mit dem Haltekörper 11 verbunden. Dagegen hat beim Ausführungsbeispiel nach Figur 2 die Düsennadel 15 einen Gewindeschaft 21, mit dem sie axial verstellbar in einer Gewindebohrung 22 im Haltekörper 11 eingeschraubt ist. Beim Ausführungsbeispiel nach Figur 3 ist die Düsennadel 15 langgestreckt und in einer Durchgangsbohrung 23 des Haltekörpers 11 verschiebbar eingesetzt. Sie wird mit einer Stellschraube 24 im Anschlußteil des Haltekörpers 11 axial eingestellt. Der Zulaufkanal 13 besteht beim Ausführungsbeispiel nach der Figur 1 aus einer axialen Sackbohrung 25 und aus einer Querbohrung 26 im zylindrischen Abschnitt 16 der Düsennadel 15. Beim Ausführungsbeispiel nach Figur 2 verläuft der Zulaufkanal 13 durch den Haltekörper 11 und eine axiale Sackbohrung im Gewindeschaft 21 sowie einer Querbohrung 26 im zylindrischen Abschnitt 16 der Düsennadel 15. Analog dazu verläuft beim Ausführungsbeispiel nach Figur 3 der Zulaufkanal 13 vom Anschluß 12 des Haltekörpers 11 axial durch die hohle Stellschraube 24 und den verlängerten Schaft der Düsennadel 15 und mündet ebenfalls durch die Querbohrung 26 im zylindrischen Abschnitt der Düsennadel 15.

Mit dem Ventilkegel 18 der Düsennadel 15 wirkt eine ringförmige Ventilmembran 31 zusammen, die mit ihrem Außenrandbereich 41 am Haltekörper 11 mittels einer Überwurfmutter 32 festgespannt ist und die mit ihrem eine Durchlaß-Öffnung 39 begrenzenden Innen-Rand 49 am Ventilkegel 18 der Düsennadel 15 unter Vorspannung dichtend anliegt. Die Überwurfmutter 32 spannt die Ventilmembran 31 unter Zwischenlage einer Hubanschlagscheibe 33 auf der einen Seite sowie einer Distanzhülse 34 und einer Ausgleichscheibe 36 auf der anderen Seite gegen eine Schulter 37 am brennraumseitigen Ende des Haltekörpers 11. Die jeweilige Dicke der Ausgleichsscheibe 36 bestimmt die Vorspannung und damit den Anlagedruck bzw. den Öffnungsdruck der Ventilmembran 31 am Ventilkegel 18. Der zylindrische Abschnitt 16 und der Ventilkegel 18 der Düsennadel 15, die Ventilmembran 31, die Distanzhülse 34 und die Schulter 37 des Haltekörpers 11 begrenzen einen Druckraum 38, in den der Zulaufkanal 13 mündet. Um das Totvolumen dieses Druckraums 38 klein zu halten, hat die Distanzhülse 34 einen Innenbund 35.

Die Ventilmembran 31 hat, um ihre Dauerfestigkeit zu erhöhen, eine in den Druckraum 38 gerichtete Wölbung 40. Bei den Ausführungsbeispielen nach den Figuren 1 bis 4 ist diese Wölbung 41 zusammengesetzt aus einem an dem ebenen, eingespannten Außenrandbereich 41 anschließenden Ringbereich 42 und aus einem von der Öffnung 39 begrenzten Innenbereich 43. Der sich über einen gerundeten Übergang 44 an den Außenrandbereich 41 anschließende Ringbereich 42 hat einen Anstellwinkel α von 40° bis 80°, vorzugsweise 65°, und der sich daran über eine Rundung 45 anschließende Innenbereich einen Anstellwinkel β im Bereich von 3° bis 10°, vorzugsweise 5°. Bei der derart geformten Membranscheibe 31 hat der Ringbereich 42 die Form eines niedrigen, steilen Kegelstumpfes und der Innenbereich 43 die Form eines flachen Kegelstumpfes, wobei die Übergänge 44, 45 gerundet sind.

Wie in den Figuren 5 bis 7 dargestellt, kann die Wölbung 40 der Ventilmembran 31 die Form eines einzigen flachen Kegelstumpfes 47 oder einer Kuppel oder Kalotte 48 haben, wobei sich der Kegelstumpf 47 bzw. die Kalotte 48 an den eingespannten Außenrandbereich 41 der Ventilmembran 31 anschließen (Diese Ausführungsformen fallen nicht unter den Anspruch 1). Bei den Ausführungsbeispielen nach den Figuren 4 bis 6 hat die Ventilmembran 31 im wesentlichen eine gleichförmige Dicke. Dagegen nimmt die Dicke der Ventilmembran 31 beim Ausführungsbeispiel nach Figur 7 anschließend an den Außenrandbereich 41 zur Öffnung 39 hin ab.

In drucklosem Zustand, wenn also im Druckraum 38 kein Druck herrscht, liegt der die Öffnung 39 der Ventilmembran 31 begrenzende Rand bzw. die Randkante 49 unter einer bestimmten Vorspannung dicht am Ventilkegel 18 der Düsennadel 15 an. Beim Fördern von Kraftstoff in den Druckraum 38 baut sich in diesem ein Druck auf, aufgrund dessen der freie Innenbereich 43 der Ventilmembran 31 nach Überwindung der Vorspannung federnd in Richtung Brennraum gebogen wird, wobei die die Öffnung 39 begrenzende Randkante 49 vom Ventilkegel 18 abhebt. Dabei bildet sich zwischen der Randkante 49 und dem Ventilkegel 18 ein ringförmiger Durchlaßspalt, so daß Kraftstoff aus dem Druckraum in den Brennraum der Brennkraftmaschine gespritzt wird. Beim Abbau des Förderdruckes federt sich die Ventilmembran 31 zurück und legt sich mit der Randkante 49 ihrer Öffnung 39 wieder dicht am Ventilkegel 18 an.

Um den Öffnungsquerschnitt der Düse zu beeinflussen und zu begrenzen, sind an der Hubanschlagsscheibe 33, die im wesentlichen deckungsgleich mit der Ventilmembran 31 ist und eine zu deren Öffnung 39 im wesentlichen konzentrische Durchlaßöffnung 51 hat, Anschläge vorgesehen. Beim Ausführungsbeispiel nach Figur 4 wird die Öffnungscharakteristik und damit die Querschnittverlaufsformung durch die Eigensteifigkeit - dem C-Wert - der nachgiebigen Ventilmembran 31 bestimmt. Der maximale Hub h wird durch einen Anschlag 52 bestimmt, der am inneren, die Durchlaßöffnung 51 begrenzenden Randbereich der Hubanschlagsscheibe 33 gegen die Ventilmembran 31 axial vorsteht. Der C-Wert der Ventilmembran 31 kann auch durch einen zweiten Anschlag 53 (Figur 8 und 9) so eingestellt werden, daß die Ventilmembran (31) nach einem Vorhub hᵥ mit einem von der Öffnung 39 radial weiter außen liegenden Ringbereich zunächst an dem zweiten, vom ersten Anschlag 52 radial weiter außen liegenden Anschlag 53 aufliegt, so daß darauf der davon radial innen liegende Ringbereich mit einer verkürzten Biegelänge zum weiteren Öffnen des Durchlaßspalts weiter durchgebogen wird, bis er nach dem Gesamthub hg am inneren Anschlag 52 zur Anlage kommt. Die sprunghafte Erhöhung des C-Wertes der Ventilmembran 31 ist aus Figur 9 zu erkennen. Die angegebene Gestaltung führt dazu, daß bei Erreichen des Teilhub-Anschlags 53 der Druck im Druckraum 38 deutlich steigen muß, um einen weiteren Hub und damit eine weitere Zunahme des Spritzquerschnitts zu erreichen. Dieser Effekt wird zusätzlich dadurch vestärkt, daß sich die hydraulisch wirksame Fläche der Ventilmembran 31 nach Erreichen des Teilhub-Anschlags 53 sprunghaft verkleinert.

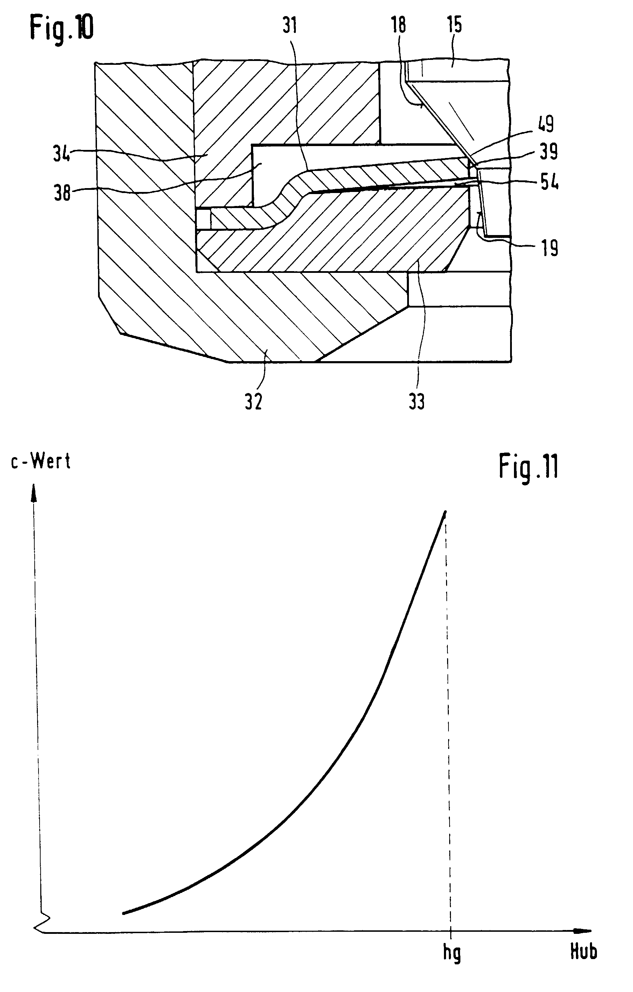

Anstelle der beschriebenen sprunghaften Vergrößerung des C-Wertes der Ventilmembran 31 mittels eines Teilhub-Anschlags 53 kann dieser auch progressiv zunehmend ausgeführt werden. Dies wird dadurch erreicht, daß die Hubanschlagsscheibe 33 anstelle von einzelnen Anschlägen eine ballige Anschlagfläche 54 aufweist (Figur 10, 11), so daß die Ventilmembran 31 beim Hub mit ihrem Innenbereich (43) fortlaufend von außen nach innen auf der Hubanschlagsscheibe 33 zur Anlage kommt. Die Kontur der Hubanschlagfläche 54 ist in Abhängigkeit von der Form der Wölbung 40 der Ventilmembran 31 und der gewünschten Öffnungscharakteristik gestaltet.

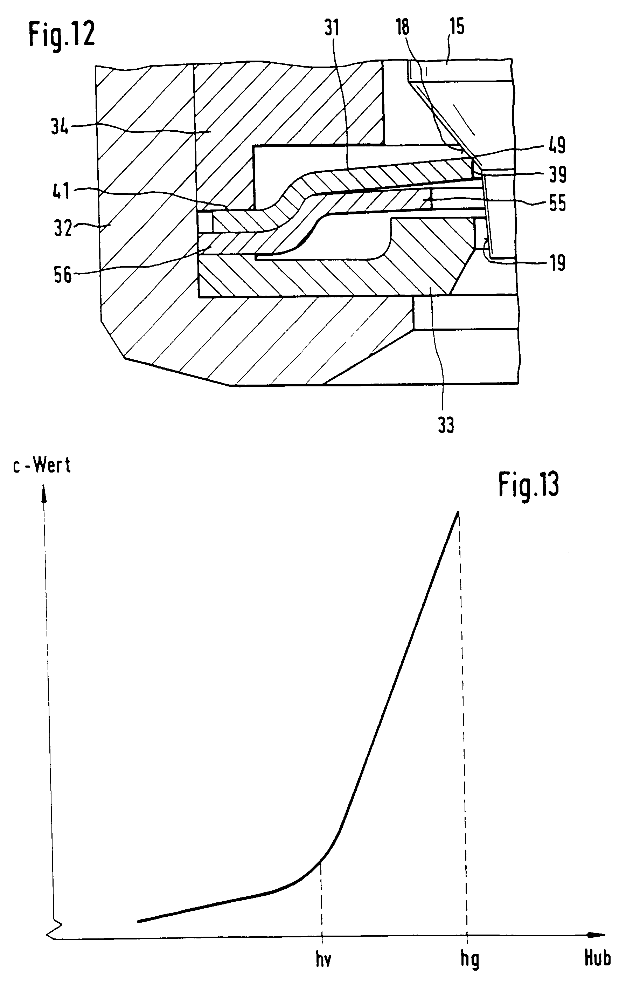

Eine weitere Möglichkeit zum Beeinflussen der Öffnungscharakteristik besteht, wie die Figuren 12 und 13 zeigen, darin, die Ventilmembran 31 mit einer Federscheibe 55 zu unterlegen, die mit ihrem Außenrandbereich 56 zusammen mit dem Außenrandbereich 41 der Ventilmembran 31 eingespannt ist. Anstelle einer einzigen Federscheibe können auch mehrere angeordnet werden. Außerdem kann durch die Form der Federscheibe der C-Wert beeinflußt werden. Je nach der gewünschten Öffnungscharakteristik der Kraftstoff-Einspritzdüse sind die Ausführungsformen mehrstufig oder stufenlos oder auch in Kombination denkbar.

Für die Formung des Spitzquerschnitts und dessen Verlauf ist neben dem Hub der Ventilmembran 31 auch die Form des Schließkegels 18 der ortsfesten Ventilnadel 15 ausschlaggebend. Je stumpfer nämlich der Kegelwinkel des Schließkegels 18 ist, desto größer ist der Durchlaß- oder Spritzquerschnitt bei gleichem Hub.

Der Ventilkegel 18 kann als Spritzkegel, Kegelstumpf, Halbkugel oder ähnliche Formen gestaltet sein. Ferner kann die Öffnung 39 der Ventilmembran 31 zylindrisch oder konisch ausgebildet sein, wobei sie sich in Spritzrichtung erweitert oder verengt. Zum Bilden einer bestimmten Querschnittverlaufsformung wird der die Öffnung 39 der Ventilmembran 31 durchsetzende Endabschnitt so geformt, daß beim Hub der Ventilmembran sich ändernde Durchlaßquerschnitte zwischen dem Umfang der Öffnungen 39 und dem Umfang des Endabschnitts 17 erzeugt werden.

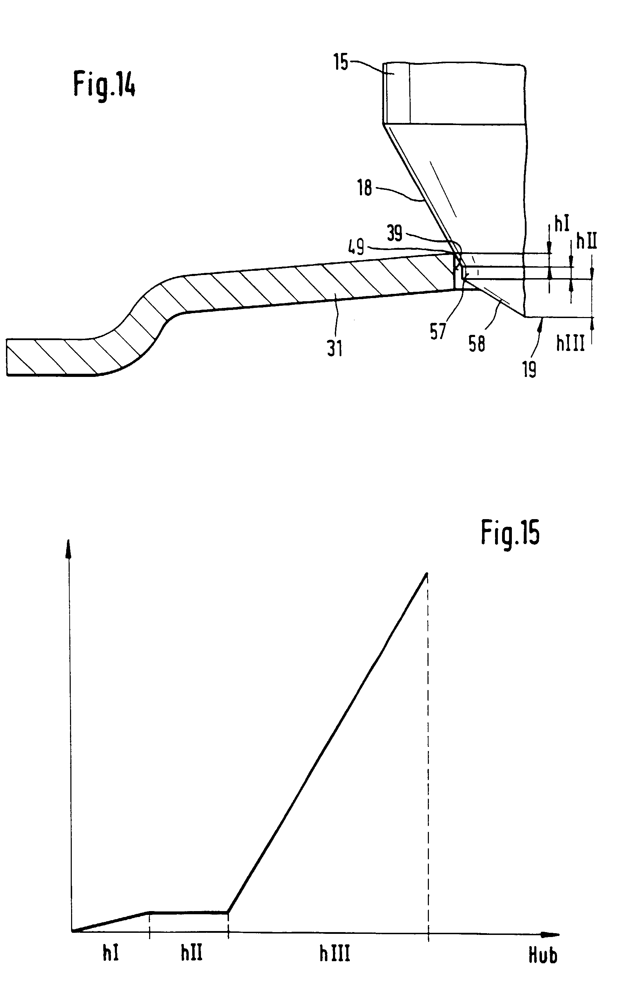

Bei den oben beschriebenen Ausführungsbeispielen schließt sich an den Ventilkegel 18 ein Strahlenformungs-Zapfen 19 in Form eines Kegelstumpfes mit steilen Kegelwinkel an, wobei der Durchmesser an der Wurzel des Kegelstumpfes kleiner ist als der Durchmesser der Öffnung 39 der Ventilmembran 31. Wie beim Ausführungsbeispiel nach Figur 14 gezeigt, können sich im Bereich des Hubs der Ventilmembran 31 ausgehend von deren kreislinienförmigem Sitz am Schließkegel 18 an diesen im Abstand eines Vorhubs ein zylindrischer Abschnitt 57 und an diesen wiederum ein kegelstumpförmiger Abschnitt 58 anschließen. Wie aus dem Diagramm nach Figur 15 zu ersehen ist, vergrößert sich der Spritzquerschnitt F beim Vorhub h_{I} langsam. Wenn darauf die Randkante 49 der Ventilmembran 31 das Ende des Schließkegels 18 überfährt, bleibt während des Überfahrens des zylindrischen Ansatzes 57 in einem Teilhub h_{II} der Spritzquerschnitt konstant, und vergrößert sich schnell beim Überfahren des kegelstumpfförmigen Abschnitts 58 im Teilhub h_{III}.

Um außerdem dem Spritzstrahl eine gewünschte Form zu geben, die für die Verbrennung auch eine wesentliche Bedeutung hat, ist stromab des von der Ventilmembran 31 und dem Ventilkegel 18 gebildeten Ventils ein Schußkanal 60 ausgebildet, der von der mittigen Durchlaßöffnung 51 der Hubanschlagscheibe 33 und von dem diese durchsetzenden Zapfen 19 begrenzt ist (Fig. 4). Die Durchlaßöffnung 51 in der Hubanschlagscheibe 33 ist vorzugsweise zylindrisch ausgebildet. Der Zapfen 19 hat vorzugsweise die Form eines in Spritzrichtung sich verjüngenden Kegelstumpfes mit sehr steilem Kegelwinkel. In Abhängigkeit vom Kegelwinkel des Zapfens 19 wird der Streuwinkel des kegeligen Spritzstrahls beeinflußt. Die Eindringtiefe des Strahls wird über die Länge des Schußkanals 60 beeinflußt. Die Länge der Durchlaßöffnung 51 beträgt daher das 0,5- bis 1,5-fache des Durchmessers des Nadelzapfens 19.

Damit die für die Strahl-Symmetrie wichtige Konzentrizität zwischen dem Schußkanal 60 und dem Nadelzapfen 19 sichergestellt ist, erfolgt eine exakte Ausrichtung über den Außendurchmesser der Hubanschlagsscheibe 33. Um sicherzustellen, daß zwischen dem Nadelzapfen 19 und der Ventilmembran 31 ebenfalls ein konzentrischer Kreisquerschnitt entsteht, ist der Außendurchmesser der Ventilmembran 31 kleiner als der Innendurchmesser der Spannmutter 32. Dadurch wird gewährleistet, daß der bei der Montage eine exakte Ausrichtung des Spritzloches durch den Ventilkegel 18 durch Selbstzentrierung stattfindet.

## Patentansprüche

1. Kraftstoffeinspritzdüse für Brennkraftmaschinen mit einem Haltekörper (11), in dessen brennraumseitigem Endabschnitt ein mit einem Zulaufkanal (13) verbundener, ringförmiger Druckraum (38) angeordnet ist, mit einer den Druckraum radial innen begrenzenden und einen Schließkegel mit einem Ventilsitz aufweisende, fest mit dem Haltekörper verbundenen Düsennadel (15), und mit einer den Druckraum zum Brennraum hin begrenzenden und am Haltekörper an ihrem Außenrandbereich festgespannten, federnden Ventilmembran (31), die eine mittige Öffnung aufweist und deren die Öffnung umgebende Randkante in Schließstellung der Ventilmembran am Ventilkegel der Düsennadel unter Spannung dichtend anliegt, wobei die Ventilmembran (31) eine sich zum Druckraum (38) hin gerichtete konvexe Wölbung (40) hat, dadurch gekennzeichnet, daß der Ventilkegel in die Öffnung ragt und die Ventilmembran (31) mit ihrer Wurzel an den festgespannten Außenrandbereich (41) anschließt, und daß sich der an den Außenrandbereich (41) anschließende Ringbereich (42) der Ventilmembran (31) unter einem verhältnismäßig steilen Anstellwinkel α anschließt und der an den Ringbereich (42) angrenzende und von der Öffnung (39) begrenzte Innenbereich (43) einen verhältnismäßig flachen Anstellwinkel β hat.

2. Kraftstoffeinspritzdüse nach Anspruch 1, dadurch gekennzeichnet, daß die Wölbung (40) die Form eines Kegelstumpfes (47) hat.

3. Kraftstoffeinspritzdüse nach Anspruch 1 oder 2, dadurch gekennzeichnet, daß die Dicke der Ventilmembran (31) im wesentlichen gleich ist.

4. Kraftstoffeinspritzdüse nach Anspruch 1 oder 2, dadurch gekennzeichnet, daß die Dicke der Ventilmembran (31) vom Außenrandbereich (41) zur Öffnung (39) hin abnimmt.

5. Kraftstoff-Einspritzdüse nach einem der Ansprüche 1 bis 4, dadurch gekennzeichnet, daß der Hub der Ventilmembran (31) von einem Anschlag (52) begrenzt wird.

6. Kraftstoff-Einspritzdüse nach Anspruch 5, dadurch gekennzeichnet, daß zwischen dem Anschlag (52) und der Einspannstelle der Ventilmembran (31) wenigstens ein zweiter Anschlag (53) angeordnet ist.

7. Kraftstoff-Einspritzdüse nach Anspruch 6, dadurch gekennzeichnet, daß der erste und der zweite Anschlag (52, 54) flächig ineinander übergehen.

8. Kraftstoff-Einspritzdüse nach einem der Ansprüche 1 bis 4, dadurch gekennzeichnet, daß die Ventilmembran (31) von einer Federscheibe (55) unterstützt ist.

9. Kraftstofeinspritzdüse nach einem der Ansprüche 5 bis 8, dadurch gekennzeichnet, daß der Anschlag (52, 54) an einer Hubanschlagsscheibe (33) angeordnet ist, die brennraumseitig zusammen mit der Ventilmembran (31) mittels einer Übewurfmutter (32) am Haltekörper (11) verspannt ist.

10. Kraftstoffeinspritzdüse nach Anspruch 9, dadurch gekennzeichnet, daß die Hubanschlagsscheibe (33) eine mittige Durchlaßöffnung (51) hat, die in Deckung mit der Öffnung (39) der Ventilmembran (31) angeordnet ist und die von einem Strahlformungs-Zapfen (19) durchsetzt ist, der sich an den Ventilkegel (18) der Düsennadel (15) anschließt.

11. Kraftstoffeinspritzdüse nach Anspruch 10, dadurch gekennzeichnet, daß die Länge der Durchlaßöffnung (51) der Hubanschlagsscheibe (33) das 0,5- bis 1,5-fache des Durchmessers des Strahlformungs-Zapfens (19) beträgt.

12. Kraftstoffeinspritzdüse nach Anspruch 10 oder 11, dadurch gekennzeichnet, daß der Strahlformungs-Zapfen (19) die Form eines Kegelstumpfes mit steilem Kegelwinkel hat.

13. Kraftstoffeinspritzdüse nach Anspruch 10 oder 11, dadurch gekennzeichnet, daß der Strahlformungs-Zapfen (19) aus einem zylindrischen Abschnitt (57) und einem kegelstumfförmigen Abschnitt (58) zusammengesetzt ist.

14. Kraftstoffeinspritzdüse nach einem der Ansprüche 1 bis 8, dadurch gekennzeichnet, daß die Einspannstelle der Ventilmembran (31) durch einen hohlzylindrischen Bund gebildet wird, der einstückig in die Ventilmembran (31) übergeht.

## Claims

1. Fuel injection nozzle for internal combustion engines, having a holding body (11) in whose combustion space-side end section an annular pressure space (38) which is connected to an inlet passage (13), having a nozzle needle (15) which radially bounds the pressure space on the inside, has a closing cone with a valve seat and is permanently connected to the holding body, and having a sprung valve diaphragm (31) which bounds the pressure space with respect to the combustion space, is clamped tight to the holding body at its outer edge region and has a central opening and whose edge which surrounds the opening bears under tension in a sealing fashion against the valve cone of the nozzle needle in the closed position of the valve diaphragm, the valve diaphragm (31) having a convex curvature (40) which is directed towards the pressure space (38), characterized in that the valve cone projects into the opening, and the valve diaphragm (31) adjoins, with its root, the clamped-tight outer edge region (41), and in that the annular region (42), adjoining the outer edge region (41), of the valve diaphragm (31) adjoins at a relatively steep setting angle α, and the inner region (43) which adjoins the annular region (42) and is bounded by the opening (39) has a relatively oblique setting angle β.

2. Fuel injection nozzle according to Claim 1, characterized in that the curvature (40) is in the shape of a truncated cone (47).

3. Fuel injection nozzle according to Claim 1 or 2, characterized in that the thickness of the valve diaphragm (31) is essentially uniform.

4. Fuel injection nozzle according to Claim 1 or 2, characterized in that the thickness of the valve diaphragm (31) decreases from the outer edge region (41) towards the opening (39).

5. Fuel injection nozzle according to one of Claims 1 to 4, characterized in that the travel of the valve diaphragm (31) is limited by a stop (52).

6. Fuel injection nozzle according to Claim 5, characterized in that at least one further stop (53) is arranged between the stop (52) and the point where the valve diaphragm (31) is clamped in.

7. Fuel injection nozzle according to Claim 6, characterized in that the first and second stops (52, 54) are contiguous with one another in a planar configuration.

8. Fuel injection nozzle according to one of Claims 1 to 4, characterized in that the valve diaphragm (31) is supported by a disc spring (55).

9. Fuel injection nozzle according to one of Claims 5 to 8, characterized in that the stop (52, 54) is arranged on a travel stop disc (33) which is clamped to the holding body (11) on the combustion space side, together with the valve diaphragm (31), by means of a union nut (32).

10. Fuel injection nozzle according to Claim 9, characterized in that the travel stop disc (33) has a central passage (51) which is arranged congruently with the opening (39) of the valve diaphragm (31) and which is penetrated by a jet-shaping pintle (19), which adjoins the valve cone (18) of the nozzle needle (15).

11. Fuel injection nozzle according to Claim 10, characterized in that the length of the passage (51) of the travel stop disc (33) is 0.5 to 1.5 times the diameter of the jet-shaping pintle (19).

12. Fuel injection nozzle according to Claim 10 or 11, characterized in that the jet-shaping pintle (19) is in the shape of a truncated cone with an acute cone angle.

13. Fuel injection nozzle according to Claim 10 or 11, characterized in that the jet-shaping pintle (19) is composed of a cylindrical section (57) and a truncated cone-shaped section (58).

14. Fuel injection nozzle according to one of Claims 1 to 8, characterized in that the point where the valve diaphragm (31) is clamped in is formed by a hollow cylindrical collar which is integrally contiguous with the valve diaphragm (31).

## Revendications

1. Injecteur de carburant pour des moteurs à combustion interne comprenant un support (11) dont le segment d'extrémité du côté de la chambre de combustion comporte une chambre de pression annulaire reliée à un canal d'alimentation (13),
une aiguille d'injecteur (15), délimitant radialement à l'intérieur la chambre de pression et ayant un cône d'obturation avec un siège de soupape, et une aiguille d'injecteur (15) solidaire du support et,
une membrane élastique formant soupape (31) délimitant intérieurement la chambre de pression du côté de la chambre de combustion et encastrée par sa périphérie dans le support, cette membrane ayant en son milieu un passage et le bord qui délimite le passage s'applique en position de fermeture de la membrane de soupape contre le cône de soupape de l'aiguille, de façon étanche avec tension,
la membrane formant soupape (31) ayant une courbure convexe (40) dirigée vers la chambre de pression (38),
caractérisé en ce que
- le cône de soupape pénètre dans l'ouverture et la membrane formant soupape (31) est adjacente avec sa base à la zone du bord extérieur (41) encastrée, et
- la zone annulaire (42) de la membrane formant soupape (31) adjacente à la zone du bord extérieur (41), rejoint avec un angle α relativement important, et la zone intérieure (43), adjacente à la zone annulaire (42) et qui délimite le passage (39) présente un angle β relativement faible.

2. Injecteur de carburant selon la revendication 1,
caractérisé en ce que
la partie bombée (40) a la forme d'un tronc de cône (47).

3. Injecteur de carburant selon la revendication 1 ou 2,
caractérisé en ce que
l'épaisseur de la membrane formant soupape (31) est pour l'essentiel égale.

4. Injecteur de carburant selon les revendications 1 ou 2,
caractérisé en ce que
l'épaisseur de la membrane formant soupape (31) diminue à partir du bord extérieur (41) jusque vers le passage (39).

5. Injecteur de carburant selon l'une quelconque des revendications 1 à 4,
caractérisé en ce que
la course de la membrane formant soupape (31) est délimitée par une butée (52).

6. Injecteur de carburant selon la revendication 5,
caractérisé en ce qu'
entre la butée (52) et le point d'encastrement de la membrane formant soupape (31), il est prévu au moins une seconde butée (53).

7. Injecteur de carburant selon la revendication 6,
caractérisé en ce que
la première et la seconde butée (52, 54) se rejoignent en surface.

8. Injecteur de carburant selon l'une quelconque des revendications 1 à 4,
caractérisé en ce que
la membrane formant soupape (31) est soutenue par une rondelle élastique (55).

9. Injecteur de carburant selon l'une des revendications 5 à 8,
caractérisée en ce que
la butée (52, 54) est prévue sur une rondelle de butée de course (33) serrée du côté de la chambre de pression avec la membrane formant soupape (31) contre le support (11) à l'aide d'un écrou chapeau (32).

10. Injecteur de carburant selon la revendication 9,
caractérisé en ce que
la rondelle de limitation de course (33) possède un passage central (51) concordant avec le passage (39) de la membrane formant soupape (31) et traversé par un téton (19) de mise en forme du jet qui poursuit le cône de soupape (18) de l'aiguille d'injecteur (15).

11. Injecteur de carburant selon la revendication 10,
caractérisé en ce que
la longueur du passage (51) de la rondelle de limitation de course (33) correspond à entre 0,5 et 1,5 fois le diamètre du téton (19) formant le jet.

12. Injecteur de carburant selon l'une quelconque des revendications 10 ou 11,
caractérisé en ce que
le téton (19) qui forme le jet a la forme d'un tronc de cône avec un angle au sommet petit.

13. Injecteur de carburant selon l'une quelconque des revendications 10 ou 11,
caractérisé en ce que
le téton (19) formant le jet se compose d'un segment cylindrique (57) et d'un segment tronconique (58).

14. Injecteur de carburant selon l'une quelconque des revendications 1 à 8,
caractérisé en ce que
la zone d'encastrement de la membrane formant soupape (31) est formée par une collerette cylindrique creuse qui rejoint dans la masse la membrane formant soupape (31).
